# EUROPEAN PATENT SPECIFICATION

(11) **EP 2 244 535 B1**
(45) Date of publication and mention of the grant of the patent: **21.02.2018**
(21) Application number: 09014687.9
(22) Date of filing: 25.11.2009
(51) Int. Cl.: H05B 41/04, H05B 41/288, H05B 41/38

(54) **Discharge lamp lighting device and illumination fixture and projector using the same**
Entladungslampenbeleuchtungsvorrichtung und Beleuchtungsbefestigung und Projektor damit
Dispositif de lampe de décharge et appareil d'éclairage et projecteur l'utilisant

(30) Priority: 25.11.2008 JP 2008300155
(43) Date of publication of application: 27.10.2010
(73) Proprietor: Panasonic Intellectual Property Management Co., Ltd., Osaka-shi, Osaka 540-6207 (JP)
(72) Inventor: Katuyosi, Nakada, Kyoto (JP); Tomoyuki, Nakano, Osaka (JP); Junichi, Hasegawa, Osaka (JP); Koji, Watanabe, Kyoto (JP)
(74) Representative: Rüger, Barthelt & Abel

(56) References cited:
- WO-A1-2008/117673
- JP-A- H0 554 988
- JP-A- H02 215 091
- JP-A- 2004 146 300

## Description

### [Field of the Invention]

The present invention relates to a discharge lamp lighting device, and an illumination fixture and a projector using the discharge lamp lighting device.

### [Background Art]

A discharge lamp lighting device (high-pressure discharge lamp lighting device) for lighting high-pressure discharge lamps such as a metal halide lamp and a high-pressure mercury lamp (high-intensity discharge lamps, which are also referred to as HID lamps) has been conventionally proposed (refer to, for example, Patent document 1).

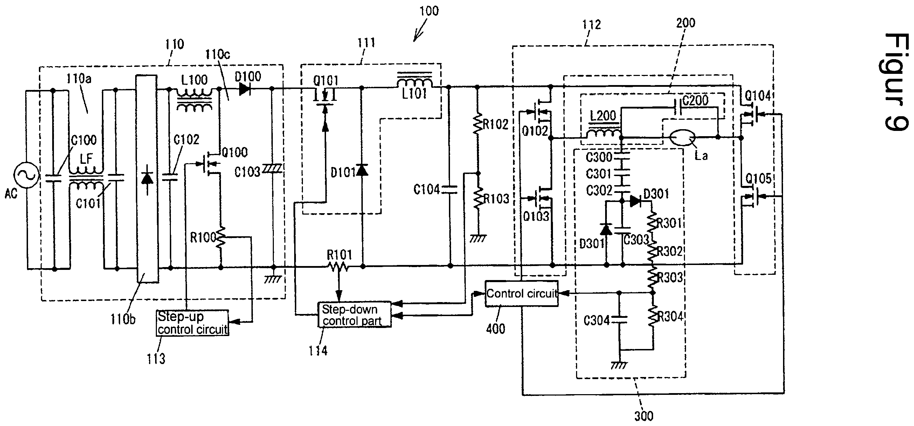

Such a discharge lamp lighting device includes, as shown in Fig. 9, a lighting circuit 100 for supplying a rectangular wave voltage with a polarity inverted at a predetermined frequency to a discharge lamp La (applying the voltage between both electrodes of the discharge lamp La), a resonance circuit 200 for supplying an output voltage corresponding to the frequency of the rectangular wave voltage of the lighting circuit 100 to the discharge lamp La (applying the voltage between both electrodes of the discharge lamp La), a voltage detecting circuit 300 for detecting the output voltage of the resonance circuit 200 and a control circuit 400.

The lighting circuit 100 mainly includes a PFC circuit 110, a down converter circuit 111 and a polarity inverting circuit 112.

The PFC circuit 110 is a circuit for outputting a DC voltage based on electric power obtained from an AC power source AC, and includes a filter 110a, a rectifier 110b and an up converter circuit 110c. The filter 110a substantially includes two capacitors (condensers) C100, C101 and a choke coil (common mode choke coil) LF. The up converter circuit 110c serves to raise an output voltage of the rectifier 110b and is formed of an inductor L100, a diode D100, a switch Q100, a resistor R100, capacitors C102, C103 and so on. The switch Q100 of such the up converter circuit 110c is controlled by a step-up control part 113.

The down converter circuit 111 serves to lower an output voltage of the up converter circuit 110c and is formed of a switch Q101, a diode D101, an inductor L101 and so on. The switch Q101 of such the down converter circuit 111 is controlled by a step-down control part 114. The lighting circuit 100 also includes a resistor R101 for detecting a lamp current of the discharge lamp La, a capacitor C104 for smoothing an output voltage of the down converter circuit 111 and resistors R102, R103 for detecting the output voltage of the down converter circuit 111.

The polarity inverting circuit 112 is a circuit for supplying the rectangular wave voltage with polarities inverted at a predetermined frequency to the discharge lamp La (applying the voltage between the both electrodes of the discharge lamp La). The polarity inverting circuit 112 is a full-bridge circuit formed of four switches Q102 to Q105. In the polarity inverting circuit 112, a connection point of the switch Q102 and the switch Q103 is a first output end and a connection point of the switch Q104 and the switch Q105 is a second output end. The discharge lamp La is inserted between the output ends.

The resonance circuit 200 includes a resonance inductor L200 formed of a coil and a resonance capacitor C200. The resonance inductor L200 is inserted between one output end of the polarity inverting circuit 112 and one electrode of the discharge lamp La. The resonance capacitor C200 is parallelly connected to the discharge lamp La. The resonance frequency of the resonance circuit 200 is determined depending on an inductance of the resonance inductor L200 and a capacitance of the resonance capacitor C200. The output voltage of the resonance circuit 200 is equal to the resonance voltage and is determined by the resonance frequency, and a frequency and an amplitude of the rectangular wave voltage of the lighting circuit 10.

The voltage detecting circuit 300 includes capacitors C300 to C304, resistors R301 to R304 and diodes D300, D301. The voltage detecting circuit 300 detects an potential of a connection point between the resonance inductor L200 and the resonance capacitor C200.

The control circuit 400 mainly controls turning ON/OFF of the switches Q102 to Q105 of the polarity inverting circuit 112.

Here, to light the discharge lamp La, it is necessary to supply a voltage which is higher than a starting voltage to the discharge lamp La, thereby causing dielectric breakdown.

For this reason, the control circuit 400 has a starting mode for starting the discharge lamp La as an operation mode. In the starting mode, the control circuit 400 sets the frequency of the rectangular wave voltage of the lighting circuit 100 based on the detection result of the voltage detecting circuit 300 so that the output voltage of the resonance circuit 200 exceeds the starting voltage of the discharge lamp La.
[Patent document 1] Japanese Translation of PCT No. 2005-507554

### [Disclosure of the Invention]

### [Problems to be solved by the Invention]

The starting voltage of the above-mentioned high-pressure discharge lamp is generally so high, and for example, in the starting mode, there are cases where the voltage as high as 3000 V must be supplied. For this reason, it is needed to design the voltage detecting circuit 300 so as to have a high voltage resistance, that is, stand a high voltage. Specifically, it is considered that the number of circuit components of the voltage detecting circuit 300 is increased to lower the voltage exerted on individual components or high voltage resistance components are used as circuit components for the voltage detecting circuit 300.

Here, when the number of components is increased as in the former case, as a matter of course, scale of the voltage detecting circuit 300 becomes large. When high voltage resistance components are used as in the latter case, since size of the high voltage resistance components is generally larger than that of low voltage resistance components, the scale of the voltage detecting circuit 300 becomes large.

For this reason, in the conventional discharge lamp lighting device, size of the voltage detecting circuit 300 becomes large, resulting in that the whole of the discharge lamp lighting device is disadvantageously grown in size.

When the resonance circuit 200 includes only the single resonance inductor L200 as shown in Fig. 9, the output voltage which can be outputted from the resonance circuit 200 is determined depending on the output voltage of the down converter circuit 111. For this reason, to supply an appropriate voltage to the discharge lamp La, the output voltage of the down converter circuit 111 needs to be increased. However, when the output voltage of the down converter circuit 111 is increased, it is need to use high voltage resistance switching elements as the switches Q102 to Q105 of the polarity inverting circuit 112, leading to increase in losses.

JP 05054988 A discloses a discharge lamp lighting device according to the preamble of the independent claims.

WO 2008/117673 A1 and JP 2004 146300 A disclose discharge lamp lighting devices that use an auto transformer and a resonance transistor connected to the tab of the auto transformer in the resonance circuit.

The discharge lamp lighting device of JP 02215091 A comprises a resonance circuit with an inductor and three capacitors connceted in series.

In consideration of the above-mentioned matters, an object of the present invention is to provide a discharge lamp lighting device which can reduce size and costs while securing startability of the discharge lamp, and an illumination fixture and a projector using the discharge lamp lighting device.

### [Means adapted to solve the Problems]

According to a first aspect of the present invention, a discharge lamp lighting device includes a lighting circuit for supplying a rectangular wave voltage with polarities inverted at a determined frequency to a discharge lamp; a resonance circuit for supplying an output voltage corresponding to a frequency of the rectangular wave voltage of the lighting circuit to the discharge lamp; a voltage detecting circuit for detecting an output voltage of the resonance circuit; and a control circuit for setting the frequency of the rectangular wave voltage based on a detection result of the voltage detecting circuit at start of the discharge lamp so that the output voltage of the resonance circuit exceeds a starting voltage of the discharge lamp, wherein the lighting circuit includes a polarity inverting circuit for converting a DC voltage obtained from a DC power source into the rectangular wave voltage and supplying the converted voltage to the discharge lamp inserted between a pair of output ends, the resonance circuit includes a resonance inductor formed of an auto transformer and a resonance capacitor, the resonance inductor being inserted between one output end of the polarity inverting circuit and the discharge lamp and the resonance capacitor being inserted between an intermediate tap of the resonance inductor and the other output end of the polarity inverting circuit, and the voltage detecting circuit detects an output voltage based on a potential of the resonance capacitor.

According to the first aspect of the present invention, the auto transformer is used as the resonance inductor forming the resonance circuit and the resonance capacitor is connected to the intermediate tap of the resonance inductor. For this reason, a voltage obtained by raising a voltage between both ends of a shunt winding (winding between one end of the resonance inductor connected to one output end of the polarity inverting circuit and the intermediate tap) according to the turn ratio of the shunt winding to a series winding (winding between the other end of the resonance inductor connected to the discharge lamp and the intermediate tap) occurs between both ends of the resonance inductor. Accordingly, the voltage between the both ends of the resonance capacitor becomes lower than the output voltage actually supplied to the discharge lamp. Thus, the potential detected by the voltage detecting circuit can be decreased while maintaining the output voltage, and it is no need to use high voltage resistance electrical components for forming the voltage detecting circuit and increase the number of electrical components. As a result, startability of the discharge lamp can be improved. Thus, reduction of size and costs can be achieved while securing startability of the discharge lamp. Furthermore, as described above, since the voltage raised at the resonance inductor formed of the auto transformer can be supplied to the discharge lamp, the DC voltage inputted to the polarity inverting circuit need not be increased. For this reason, it is no need to use high voltage resistance circuit components in the polarity inverting circuit, thereby preventing increase in losses.

According to a second aspect of the present invention, a discharge lamp lighting device includes a lighting circuit for supplying a rectangular wave voltage with polarities inverted at a determined frequency to a discharge lamp; a resonance circuit for supplying an output voltage corresponding to a frequency of the rectangular wave voltage of the lighting circuit to the discharge lamp; a voltage detecting circuit for detecting an output voltage of the resonance circuit; and a control circuit for setting the frequency of the rectangular wave voltage based on a detection result of the voltage detecting circuit at start of the discharge lamp so that the output voltage of the resonance circuit exceeds a starting voltage of the discharge lamp, wherein the lighting circuit includes a polarity inverting circuit, a step-down inductor and a step-down capacitor, the polarity inverting circuit converts a DC voltage from a DC power source into the rectangular wave voltage and supplies the converted voltage to the discharge lamp inserted between a pair of output ends, the step-down inductor is inserted between one output end of the polarity inverting circuit and the discharge lamp, and the step-down capacitor is inserted between a connection point of the step-down inductor and the discharge lamp and the other output end of the polarity inverting circuit, the resonance circuit includes a resonance inductor formed of an auto transformer and a resonance capacitor, the resonance inductor is inserted between the other output end of the polarity inverting circuit and the discharge lamp and the resonance capacitor is inserted between an intermediate tap of the resonance inductor and a positive electrode or a negative electrode of the DC power source, and the voltage detecting circuit detects the output voltage of the resonance circuit based on a potential of the resonance capacitor.

According to the second aspect of the present invention, the auto transformer is used as the resonance inductor forming the resonance circuit and the resonance capacitor is connected to the intermediate tap of the resonance inductor. For this reason, a voltage obtained by raising a voltage between both ends of the shunt winding (winding between one end of the resonance inductor connected to one output end of the polarity inverting circuit and the intermediate tap) according to the turn ratio of the shunt winding to the series winding (winding between the other end of the resonance inductor connected to the discharge lamp and the intermediate tap) occurs between both ends of the resonance inductor. Accordingly, the voltage between the both ends of the resonance capacitor becomes lower than the output voltage actually supplied to the discharge lamp. Thus, the potential detected by the voltage detecting circuit can be decreased while maintaining the output voltage, and it is no need to use high voltage resistance electrical components for forming the voltage detecting circuit and increase the number of electrical components. As a result, startability of the discharge lamp can be improved. Thus, reduction of size and costs can be achieved while securing startability of the discharge lamp. Furthermore, since it is no need to provide the step-down chopper circuit or the like separately from the polarity inverting circuit, a circuit scale can be reduced and further reduction of size and costs can be achieved. In addition, as described above, since the voltage raised at the resonance inductor formed of the auto transformer can be supplied to the discharge lamp, the DC voltage inputted to the polarity inverting circuit need not be increased. For this reason, it is no need to use high voltage resistance circuit components in the polarity inverting circuit, thereby preventing increase in losses.

According to a third aspect of the present invention, a discharge lamp lighting device includes: a lighting circuit for supplying a rectangular wave voltage with polarities inverted at a determined frequency to a discharge lamp; a resonance circuit for supplying an output voltage corresponding to a frequency of the rectangular wave voltage of the lighting circuit to the discharge lamp; a voltage detecting circuit for detecting an output voltage of the resonance circuit; and a control circuit for setting the frequency of the rectangular wave voltage based on a detection result of the voltage detecting circuit at start of the discharge lamp so that the output voltage of the resonance circuit exceeds a starting voltage of the discharge lamp, wherein the lighting circuit includes a polarity inverting circuit, a step-down inductor, a first step-down capacitor and a second step-down capacitor, the polarity inverting circuit converts a DC voltage obtained from a DC power source into the rectangular wave voltage and supplies the converted voltage to the discharge lamp inserted between a pair of output ends, the step-down inductor is inserted between one output end of the polarity inverting circuit and the discharge lamp, the first step-down capacitor is inserted between a connection point of the step-down inductor and the discharge lamp and a positive electrode of the DC power source, the second step -down capacitor is inserted between the connection point and a negative electrode of the DC power source, the resonance circuit includes a resonance inductor formed of an auto transformer and a resonance capacitor, the resonance inductor is inserted between the other output end of the polarity inverting circuit and the discharge lamp, the resonance capacitor is inserted between an intermediate tap of the resonance inductor and the connection point, and the voltage detecting circuit detects the output voltage of the resonance circuit based on a potential of the resonance capacitor.

According to the third aspect of the present invention, the auto transformer is used as the resonance inductor forming the resonance circuit and the resonance capacitor is connected to an intermediate tap of the resonance inductor. For this reason, a voltage obtained by raising the voltage between both ends of the shunt winding (winding between one end of the resonance inductor connected to one output end of the polarity inverting circuit and the intermediate tap) according to the turn ratio of the shunt winding to the series winding (winding between the other end of the resonance inductor connected to the discharge lamp and the intermediate tap) occurs between the both ends of the resonance inductor. Accordingly, the voltage between the both ends of the resonance capacitor becomes lower than the output voltage actually supplied to the discharge lamp. Thus, a potential detected by the voltage detecting circuit can be decreased while maintaining the output voltage, and it is no need to use high voltage resistance electrical components for forming the voltage detecting circuit and increase the number of electrical components voltage detecting circuit. As a result, startability of the discharge lamp can be improved. Thus, reduction of size and costs can be achieved while securing startability of the discharge lamp. Furthermore, since it is no need to provide the step-down chopper circuit or the like separately from the polarity inverting circuit, a circuit scale can be reduced and further reduction of size and costs can be achieved. In addition, as described above, since the voltage raised at the resonance inductor formed of the auto transformer can be supplied to the discharge lamp, the DC voltage inputted to the polarity inverting circuit need not be increased. For this reason, it is no need to use high voltage resistance circuit components in the polarity inverting circuit, thereby preventing increase in losses.

According to a fourth aspect of the present invention, in any one of the first to third aspects of the present invention, at start of the discharge lamp, the control circuit changes the frequency of the rectangular wave voltage in a predetermined frequency range so that the frequency of the rectangular wave voltage gets close to a target frequency, and the target frequency is 1 / (an odd number) of the resonance frequency of the resonance circuit.

According to the fourth aspect of the present invention, the curve which is substantially similar to the resonance curve in vicinity of the resonance frequency of the resonance circuit can be used, thereby securing the voltage supplied to the discharge lamp. Furthermore, since the inductance value of the resonance inductor of the resonance circuit can be made smaller, reduction is size and costs can be achieved.

According to a fifth aspect of the present invention, in any one of the first to fourth aspects of the present invention, the resonance capacitor includes a series circuit formed of a plurality of capacitors and the voltage detecting circuit detects the output voltage based on the potential of one of the plurality of capacitors.

According to the fifth aspect of the present invention, as compared to the case where the resonance capacitor is formed of a single capacitor, the potential detected by the voltage detecting circuit can be further lowered. For this reason, the voltage detecting circuit having a lower voltage resistance can be adopted. Thus, further reduction of size and costs can be achieved.

According to a sixth aspect of the present invention, there are provided the discharge lamp lighting device according to any one of the first to fifth aspects of the present invention and a fixture main body to which a discharge lamp lighted by the discharge lamp lighting device is attached.

According to the sixth aspect of the present invention, size and costs can be reduced while securing startability of the discharge lamp.

According to a seventh aspect of the present invention, there are provided the discharge lamp lighting device according to any one of the first to fifth aspects of the present invention and a projector main body to which a discharge lamp lighted by the discharge lamp lighting device is attached.

According to the seventh aspect of the present invention, size and costs can be reduced while securing startability of the discharge lamp.

### [Effect of the Invention]

The present invention has an effect of reducing size and costs while securing startability of the discharge lamp.

### [Best Mode for Carrying Out the Invention]

### (First embodiment)

A discharge lamp lighting device in the present embodiment is a high-pressure discharge lamp lighting device for lighting high-pressure discharge lamps such as a metal halide lamp and a high-pressure mercury lamp (high-intensity discharge lamps, which are also referred to as HID lamps).

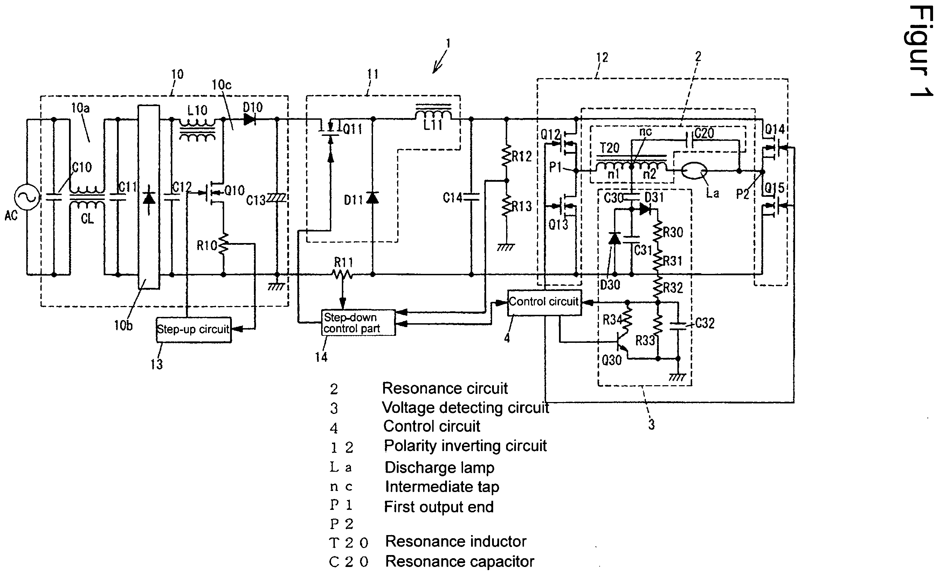

The discharge lamp lighting device in the present embodiment serves to light a discharge lamp La as the high-pressure discharge lamp by electric power obtained from an AC power source AC and, as shown in Fig. 1, includes a lighting circuit 1, a resonance circuit 2, a voltage detecting circuit 3 and a control circuit 4. In the present embodiment, a commercial AC power source having a frequency of 60 Hz and an effective value (nominal value) of 100V is assumed as the AC power source AC.

The lighting circuit 1 mainly includes a PFC circuit (power factor improving circuit) 10, a down converter circuit 11 and a polarity inverting circuit (inverter circuit) 12.

The PFC circuit 10 is a circuit for outputting a DC voltage based on the electric power supplied from the AC power source AC. The PFC circuit 10 includes a filter 10a, a rectifier 10b and an up converter circuit 10c. The filter 10a includes two capacitors (condensers) C10, C11 and a choke coil (common mode choke coil) CL. The rectifier 10b is formed of a diode bridge for full-wave rectifying the AC voltage outputted from the AC power source AC and so on.

The up converter circuit 10c includes a step-up chopper circuit as a main component and is used to raise an output voltage of the rectifier 10b. In the present embodiment, the up converter circuit 10c includes an inductor L10, a diode D10, a switch Q10, a resistor R10 and capacitors C12, C13. Here, the capacitor C12 is a smoothing capacitor inserted between output terminals of the rectifier 10b. One end of the inductor L10 is connected to the high potential-side output terminal of the rectifier 10b and the other end of the inductor L10 is connected to an anode of the diode D10. The switch Q10 is a switching element such as a MOSFET and is inserted between the other end of the inductor L10 and the low potential-side output terminal of the rectifier 10b. The resistor R10 is a resistor for current detection and is inserted between the switch Q10 and a low potential-side output terminal of the rectifier 10b. The capacitor C13 is a capacitor for smoothing the output voltage of the up converter circuit 10c and is inserted between a cathode of the diode D 10 and a reference potential point (ground).

The down converter circuit 11 is formed of a step-down chopper circuit and is used to lower the output voltage of the up converter circuit 10c. In the present embodiment, the down converter circuit 11includes a switch Q11, a diode D11 and an inductor L11. The switch Q11 is a semiconductor switching element such as a MOSFET and is inserted between a high potential-side terminal of the capacitor C13 and the inductor L11. A cathode of the diode D11 is connected between the switch Q11 and the inductor L11 and an anode of the D11 is connected to the ground through a resistor R11. Here, the resistor R11 is a resistor for lamp current detection. A capacitor C14 is parallelly connected to a series circuit formed of the inductor L11 and the diode D11. The capacitor C14 is a capacitor for smoothing the output voltage of the down converter circuit 11. A series circuit formed of resistors R12, R13 is connected to the capacitor C14. The series circuit is a voltage dividing circuit for detecting the output voltage of the down converter circuit 11.

The lighting circuit 1 includes a step-up control part 13 for controlling the switch Q10 of the up converter circuit 10b. The step-up control part 13 includes, for example, a logic circuit and a microcomputer as its main components. The step-up control part 13 performs an ON/OFF control of the switch Q10 referring to a current value detected in the resistor R10 so that a voltage between both terminals of the capacitor C13, (that is, the output voltage of the up converter circuit 10b) may be a predetermined voltage. Control of the switch Q10 is performed, for example, by feeding a PWM signal from the step-up control part 13 to the switch Q10.

The lighting circuit 1 also includes a step-down control part 14 for controlling the switch Q11 of the down converter circuit 10b. The step-down control part 14 includes, for example, a logic circuit and a microcomputer as its main components. The step-down control part 14 performs an ON/OFF control of the switch Q11 referring to a current value detected in the resistors R12, R13 so that a voltage between both terminals of the capacitor C14 (that is, the output voltage of the down converter circuit 11) may be a predetermined voltage. The control of the switch Q11 is performed, for example, by feeding a PWM signal from the step-down control part 14 to the switch Q11.

The polarity inverting circuit 12 is a circuit for supplying a rectangular wave voltage with polarities inverted at a predetermined frequency to the discharge lamp La (for applying the rectangular wave voltage between both electrodes of the discharge lamp La). The polarity inverting circuit 12 includes four switches Q12 to Q15. Describing in more detail, the polarity inverting circuit 12 is a full-bridge circuit having a series circuit formed of the switches Q12, Q13 each parallelly connected to the capacitor C14 and a series circuit formed of the switches Q14, Q15. In the polarity inverting circuit 12, a connection point between the switch Q12 and the switch Q13 is a first output end P1, a connection point between the switch Q14 and the switch Q15 is a second output end P2, and the discharge lamp La is inserted between the output ends P1, P2. The switches Q12 to Q15 each are a semiconductor switching element such as an MOSFET.

The PFC circuit 10, the down converter circuit 11, the step-up control part 13 and the step-down control part 14 in the above-mentioned lighting circuit 1 together with the AC power source AC form a DC power source. Thus, the polarity inverting circuit 12 converts a DC voltage obtained from the DC power source (that is, the output voltage of the down converter circuit 11) into the above-mentioned rectangular wave voltage and applies the converted voltage to between the both electrodes of the discharge lamp La inserted between the pair of output ends P1, P2.

The resonance circuit 2 supplies the output voltage corresponding to a frequency of the rectangular wave voltage of the lighting circuit 1 to the discharge lamp La and includes a resonance inductor T20 and a resonance capacitor C20. The resonance inductor T20 is inserted between the first output end P1 of the polarity inverting circuit 12 and one electrode of the discharge lamp La. In the resonance circuit 2 in the present embodiment, the resonance inductor T20 is a so-called auto transformer, in which a primary winding n1 is serially connected to a secondary winding n2. An intermediate tap (tap) nc is drawn from between the primary winding n1 and the secondary winding n2. In the present embodiment, the primary winding n1 is a winding disposed between an end of the resonance inductor T20 connected to the first output end P1 of the polarity inverting circuit 12 and an intermediate tap nc, and is used as a shunt winding. The secondary winding n2 is a winding disposed between an end of the resonance inductor T20 connected to the discharge lamp La and the intermediate tap nc, and is used as a series winding. The resonance capacitor C20 is inserted between the intermediate tap nc of the resonance inductor T20 and the second output end P2 of the polarity inverting circuit 12.

In the resonance circuit 2 in the present embodiment, the primary winding n1 of the resonance inductor T20 and the resonance capacitor C20 constitute an LC series resonance circuit. A resonance frequency of the LC series resonance circuit is determined depending on inductance of the primary winding n1 of the resonance inductor T20 and capacitance of the resonance capacitor C20. A resonance voltage of the LC series resonance circuit is determined depending on the resonance frequency of the LC series resonance circuit and, a frequency and an amplitude of the rectangular wave voltage of the lighting circuit 1.

The output voltage of the resonance circuit 2 is equal to a voltage between both ends of the resonance inductor T20. The voltage between the both ends of the resonance inductor T20 is equal to a voltage obtained by raising the resonance voltage of the LC series resonance circuit according to the turn ratio of the primary winding n1 to the secondary winding n2 (that is, a turn ratio of the shunt winding to the series winding). For example, when the turn ratio is 1:1, the output voltage which is equal to a voltage obtained by doubling the voltage between the both ends of the resonance capacitor C20 is supplied to the discharge lamp La.

The voltage detecting circuit 3 serves to detect the output voltage of the resonance circuit 2. The voltage detecting circuit 3 includes capacitors C30 to C32, resistors R30 to R34, diodes D30, D31 and a switch Q30. In the voltage detecting circuit 3, one end of the capacitor C30 is connected to the intermediate tap nc of the resonance inductor T20. The other end of the capacitor C30 is connected to a low potential-side terminal of the capacitor C14 through the capacitor C31. A cathode of the diode D30 and an anode of the diode D31 are connected to the other end of the capacitor C30. An anode of the diode D30 is connected to the low potential-side terminal of the capacitor C14. The resistors R30 to R33 are sequentially connected in series and constitute a voltage dividing circuit. The voltage dividing circuit is inserted between the cathode of the diode D30 and the ground. The capacitor C32 is parallelly connected to the resistor R33 of the voltage dividing circuit, and parallelly connected to a series circuit formed of the resistor R34 and the switch Q30.

The voltage detecting circuit 3 outputs a voltage obtained by dividing a voltage which is equal to an absolute value of a potential of the resonance capacitor C20 by the voltage dividing circuit (in the present embodiment, a voltage between both ends of the resistor R33) as a detection voltage to the control circuit 4. Here, the switch Q30 serves to change a voltage dividing ratio of the voltage dividing circuit, and is formed of a semiconductor switching element such as a bipolar transistor. Such switch Q30 is controlled to be turned ON/OFF by the control circuit 4.

Even when the potential of the resonance capacitor C20 is high, the voltage detecting circuit 3 can set the detection voltage to the level which can be detected by the control circuit 4 by appropriately setting the voltage dividing ratio. For example, even when the potential of the resonance capacitor C20 is 1500V, the voltage dividing ratio can be set so that the detection voltage becomes 5V.

The control circuit 4 controls turning ON/OFF of the switches Q12 to Q15 of the polarity inverting circuit 12. The control circuit 4 includes, for example, a microcomputer as its main component. The control of each of the switching elements Q12 to Q15 is performed by supplying a PWM signal from the control circuit 4 to each of the switching elements Q12 to Q15.

The high-pressure discharge lamp has a characteristic that, after occurrence of dielectric breakdown, arc discharge starts through glow discharge, and then, at the time when temperature in a luminous tube is made uniform and stabilized, a lamp voltage becomes substantially constant. Therefore, to light the high-pressure discharge lamp, it is need to cause dielectric breakdown.

For this reason, the control circuit 4 has two operation modes: a starting mode and a lighting mode.

In the lighting mode, the control circuit 4 controls the switches Q12 to Q15 so that a state where the switches Q12, Q15 are turned ON and the switches Q13, Q14 are turned OFF (first state) and a state where the switches Q12, Q15 are turned OFF and the switches Q13, Q14 are turned ON (second state) are alternately replaced with each other. Thereby, the rectangular wave voltage is applied between the output ends P1, P2 of the polarity inverting circuit 12. Here, the frequency of the rectangular wave voltage is determined depending on the time when the first state and the second state are replaced with each other. In the lighting mode, the frequency of the rectangular wave voltage is set to, for example, about 100 Hz.

In the starting mode, the control circuit 4 sets the frequency of the rectangular wave voltage of the lighting circuit 1 based on the detection result of the voltage detecting circuit 3 so that the output voltage of the resonance circuit 2 exceeds the starting voltage of the discharge lamp La. Here, the control circuit 4 changes the frequency of the rectangular wave voltage in a predetermined frequency range so that the frequency of the rectangular wave voltage gets close to a target frequency. In the present embodiment, the control circuit 4 gradually changes the frequency of the rectangular wave voltage from a high frequency side toward a low frequency side, and fixes the frequency of the rectangular wave voltage at the time when the output voltage of the resonance circuit 2 reaches a predetermined voltage exceeding the starting voltage of the discharge lamp La. In this case, the target frequency is a resonance frequency of the resonance circuit 2 (the resonance frequency of the LC series resonance circuit).

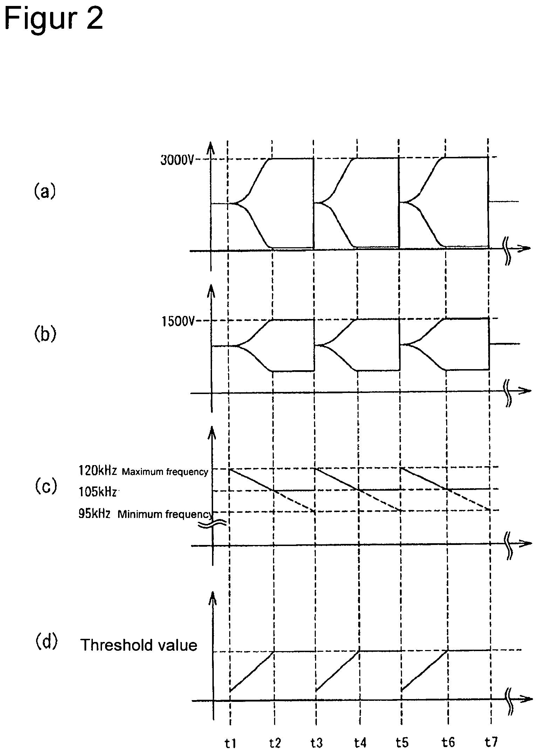

Operations of the control circuit 4 in the starting mode will be described below referring to Figs. 2(a) to 2(d). The description is made on the assumption that the resonance frequency of the LC series resonance circuit in the resonance circuit 2 is 100 kHz, the predetermined voltage is 3000 V, the turn ratio of the primary winding n1 to the secondary winding n2 in the resonance inductor T20 is 1:1 and a magnitude of the detection voltage of the voltage detecting circuit 3 is 1/300 of the voltage between the both ends of the resonance capacitor C20. Fig. 2(a) shows an envelope showing a change of the output voltage of the resonance circuit 2 with time, Fig. 2(b) shows an envelope showing a change of the voltage between the both ends of the resonance inductor C20 with time, Fig. 2(c) shows a change of the frequency of the rectangular wave voltage with time and Fig. 2(d) shows a change of the detection voltage of the voltage detecting circuit 3 with time.

In this example, a range in which the frequency of the rectangular wave voltage is changed is determined based on the resonance frequency of the LC series resonance circuit. In the present embodiment, a maximum frequency of the rectangular wave voltage is set to 120 kHz and a minimum frequency of the rectangular wave voltage is set to 95 kHz. The turn ratio of the primary winding n1 to the secondary winding n2 of the resonance inductor T20 in the resonance circuit 2 is 1:1. For this reason, when the voltage between the both ends of the resonance capacitor C20 reaches 1500 V, the output voltage of the resonance circuit 2 becomes 3000 V. When the voltage between the both ends of the resonance capacitor C20 is 1500 V, the detection voltage of the voltage detecting circuit 3 is 5 V. Thus, in the control circuit 4, a threshold value at which the frequency of the rectangular wave voltage is fixed is set to 5 V.

Consequently, in the starting mode, the control circuit 4 first sets the frequency of the rectangular wave voltage to 120 kHz (time t1). Thereafter, the control circuit 4 lowers the frequency of the rectangular wave voltage. In this connection, the resonance voltage of the LC series resonance circuit and the output voltage of the resonance circuit 2 rise and the detection voltage of the voltage detecting circuit 3 also rises.

When the detection voltage of the voltage detecting circuit 3 reaches 5 V (time T2), the control circuit 4 fixes the frequency of the rectangular wave voltage (the frequency is fixed to 105 kHz in Fig. 2(c)). Thereby, the output voltage of the resonance circuit 2 is maintained at 3000 V. Thereafter, similar operations are repeated at times t3, t4, t5, t5, t6, ···. Then, after the discharge lamp La is lighted, the control circuit 4 shifts from the starting mode to the lighting mode. Whether or not the discharge lamp La is lighted can be determined, for example, by using the lamp current detected by the resistor R11. Such matter is a conventionally known matter and thus, description thereof is omitted.

As described above, in the discharge lamp lighting device in the present embodiment, the auto transformer is used as the resonance inductor T20 forming the resonance circuit 2 and the resonance capacitor C20 is connected to the intermediate tap nc of the resonance inductor T20. For this reason, a voltage obtained by raising the voltage between both ends of the primary winding n1 as the shunt winding (winding between one end of the resonance inductor T20 connected to the first output end P1 in the polarity inverting circuit 12 and the intermediate tap nc) according to the turn ratio of the primary winding n1 to the secondary winding n2 as the series winding (winding between the other end of the resonance inductor T20 connected to the discharge lamp La and the intermediate tap nc) occurs between the both ends of the resonance inductor T20. In other words, by adjusting the turn ratio of the primary winding n1 to the secondary winding n2 in the resonance inductor T20, the output voltage of the resonance circuit 2 can be set.

Therefore, in the discharge lamp lighting device in the present embodiment, the voltage between the both ends of the resonance capacitor C20 becomes lower than the output voltage of the resonance circuit 2 actually supplied to the discharge lamp La. Thus, the potential detected by the voltage detecting circuit 3 can be decreased while maintaining the output voltage of the resonance circuit 2. For this reason, it is no need to use high voltage resistance electrical components for forming the voltage detecting circuit 3 and increase the number of electrical components. Thereby, startability of the discharge lamp La can be improved. Therefore, reduction of size and costs can be achieved while securing startability of the discharge lamp La. Advantageously, the auto transformer, in particular, can be reduced in size more easily than an insulating transformer.

Furthermore, as described above, since the voltage raised by the resonance inductor T20 formed of the auto transformer can be supplied to the discharge lamp La, the DC voltage (output voltage of the down converter circuit 11) inputted to the polarity inverting circuit 12 need not be increased. For this reason, it is no need to use high voltage resistance circuit components in the polarity inverting circuit 12, for example, high voltage resistance switching elements as the switches Q12 to Q15, thereby preventing increase in losses.

Although the turn ratio of the primary winding n1 to the secondary winding n2 in the resonance inductor C20 is 1:1 in the above-mentioned example, it is not limited to 1:1.

As described above, the control circuit 4 changes the frequency of the rectangular wave voltage in the predetermined frequency range so that the frequency of the rectangular wave voltage gets close to the target frequency. Here, in the above-mentioned example, the target frequency is set to the resonance frequency of the resonance circuit 2. However, the target frequency may be 1 / (an odd number) of the resonance frequency of the resonance circuit 2. For example, when the resonance frequency of the resonance circuit 2 is 300 kHz, 100 kHz, which is 1/3 of 300 kHz, may be set as the target frequency. In this case, for example, as in the above-mentioned example, a maximum frequency of the rectangular wave voltage may be set to 120 kHz and a minimum frequency of the rectangular wave voltage may be set to 95 kHz.

In this manner, a curve which is substantially similar to a resonance curve in the vicinity of the resonance frequency of the resonance circuit 2 can be used. For this reason, the voltage supplied to the discharge lamp La (the output voltage of the resonance circuit 2) can be secured while lowering the frequency of the rectangular wave voltage. Furthermore, since an inductance value of the resonance inductor T20 in the resonance circuit 2 can be made smaller, reduction of size and costs can be achieved. The target frequency is not limited to 1/3 of the resonance frequency of the resonance circuit 2 and only needs to be 1 / (an odd number) such as 1/5 and 1/7 of the resonance frequency of the resonance circuit 2. Alternatively, the target frequency may be close to 1 / (an odd number) of the resonance frequency of the resonance circuit 2.

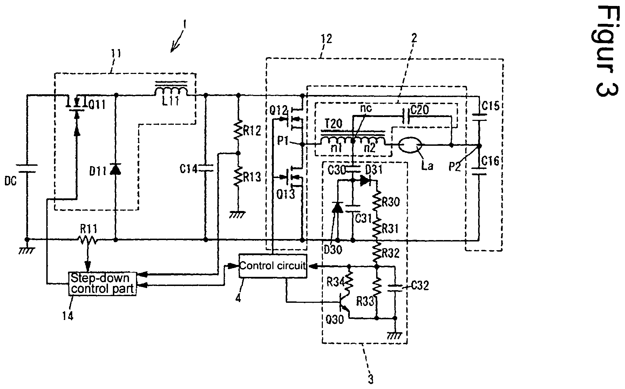

Although the polarity inverting circuit 12 is a full-bridge circuit (full-bridge inverter circuit) in the example shown in Fig. 1, a half-bridge circuit (half-bridge inverter circuit) as shown in Fig. 3 may be adopted. In Fig. 3, for simplification of illustration, the AC power source AC and the PFC circuit 10 are shown as the DC power source DC. Since only a polarity inverting circuit 12 in the discharge lamp lighting devices shown in Fig. 3 is different from the polarity inverting circuit 12 in Fig. 1, similar elements are given the same reference numerals and description thereof is omitted.

The polarity inverting circuit 12 shown in Fig. 3 includes the switches Q12, Q13 and capacitors C15, C16. In the polarity inverting circuit 12, a series circuit formed of the switches Q12, Q13 and a series circuit formed of the capacitor C15, C16 each are connected to the capacitor C14 in parallel. The discharge lamp lighting device shown in Fig. 3 can obtain similar effects to those obtained by the discharge lamp lighting device shown in Fig. 1.

The discharge lamp lighting device in the present embodiment can be used for an illumination fixture such as a downlight and a spotlight. Such illumination fixture (not shown) has the discharge lamp lighting device in the present embodiment and a fixture main body (not shown) to which the discharge lamp La lighted by the discharge lamp lighting device is attached. According to such illumination fixture, reduction in size and costs can be achieved while securing startability of the discharge lamp La. The discharge lamp lighting device in the present embodiment can also be used for a projector. Such projector (not shown) has the discharge lamp lighting device in the present embodiment and a projector main body (not shown) to which the discharge lamp La lighted by the discharge lamp lighting device is attached. According to such projector, size and costs can be reduced while securing startability of the discharge lamp La. As a matter of course, below-mentioned discharge lamp lighting devices in second to fourth embodiments can be similarly applied to the illumination fixture and the projector.

### (Second embodiment)

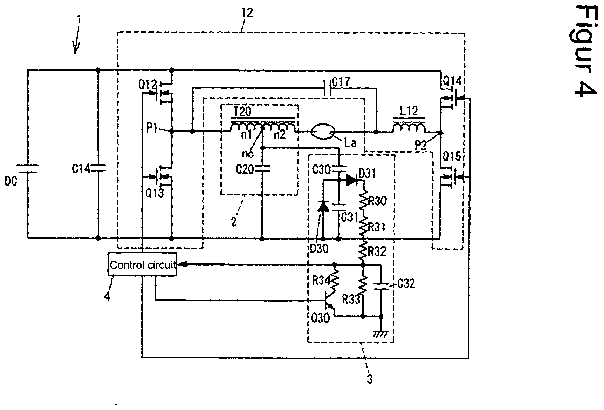

In discharge lamp lighting device in the present embodiment, as shown in Fig. 4, the lighting circuit 1 and the control circuit 4 are mainly different from those in the first embodiment. Since the other configuration in the present embodiment is similar to configuration in the first embodiment, similar elements are given the same reference numerals and description thereof is omitted.

The lighting circuit 1 in the present embodiment is different from the lighting circuit 1 in the first embodiment in that it includes a step-down inductor L12 and a step-down capacitor C17 in place of the down converter circuit 11 (refer to Fig. 1). As in the first embodiment, the lighting circuit 1 in the present embodiment includes the PFC circuit 10 and the polarity inverting circuit 12. However, in Fig. 4, for simplification of illustration, the AC power source AC and the PFC circuit 10 are shown as the DC power source DC.

As in the first embodiment, the polarity inverting circuit 12 includes the four switches Q12 to Q15. Here, step-down inductor L12 is inserted between the output end P2 of the polarity inverting circuit 12 and the electrode (electrode electrically connected to the output end P2) of the discharge lamp La. The step-down capacitor C17 is inserted between the connection point of the step-down inductor L12 and the discharge lamp La, and the output end P1 of the polarity inverting circuit 12.

In other words, in the lighting circuit 1 in the present embodiment, the switches Q12 to Q15, the step-down inductor L12 and the step-down capacitor C17 constitute a step-down chopper circuit.

As in the first embodiment, the resonance circuit 2 in the present embodiment includes the resonance inductor T20 formed as the auto transformer and the resonance capacitor C20. The resonance inductor T20 is inserted between the output end P1 of the polarity inverting circuit 12 and the electrode (electrode electrically connected to the output end P1) of the discharge lamp La. The resonance capacitor C20 is inserted between the intermediate tap nc of the resonance inductor T20 and a negative electrode of the DC power source DC. As in the first embodiment, one end of the capacitor C30 of the voltage detecting circuit 3 is connected to the intermediate tap nc of the resonance inductor T20.

As in the first embodiment, the control circuit 4 in the present embodiment has the starting mode and the lighting mode as operation modes. However, in the control circuit 4 in the present embodiment, control of the switches Q12 to Q15 in the lighting mode is different from that in the first embodiment. Control of the switches Q12 to Q5 in the starting mode is the same as that in the first embodiment.

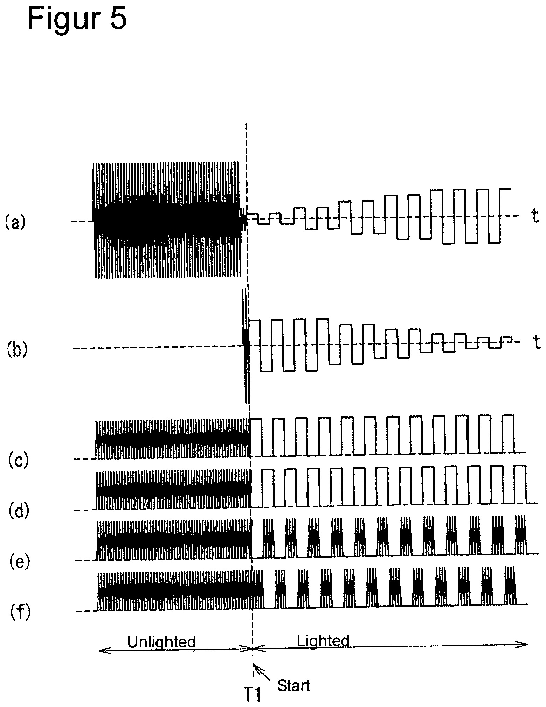

Operations of the control circuit 4 in the present embodiment will be described below referring to Figs. 5. Fig. 5(a) shows a change of the voltage (lamp voltage) applied to between the both electrodes of the discharge lamp La with time and Fig. 5(b) shows a change of the lamp current of the discharge lamp La with time. Figs. 5, (c) to (f) show changes of ON/OFF of the switches Q12 to Q15 with time, respectively.

In the lighting mode, the control circuit 4 in the present embodiment alternately performs control to turn ON/OFF the switch Q15 with a predetermined frequency in the state where the switch Q12 is turned ON and the switches Q13, Q14 are turned OFF (first control) and control to turn ON/OFF the switch Q13 with the predetermined frequency in the state where the switch Q14 is turned ON and the switches Q12, Q15 are turned OFF (second control). Thereby, the rectangular wave voltage is applied to between both electrodes of the discharge lamp La. The predetermined frequency is higher than the frequency of the rectangular wave voltage. For example, when the frequency of the rectangular wave voltage is a few hundreds of Hz, the predetermined frequency is set to from a few hundreds of Hz to a few dozens of kHz.

The lighting circuit 1 in the present embodiment is, as described above, provided with the step-down inductor L12 and the step-down capacitor C17. For this reason, according to the first control, the switch Q15, the step-down inductor L12 and the step-down capacitor C17 constitute the step-down chopper circuit. A voltage value of the rectangular wave voltage at this time increases/decreases depending on the ON/OFF frequency of the switch Q15. On the other hand, according to the second control, the switch Q13, the step-down inductor L12 and the step-down capacitor C17 constitute the step-down chopper circuit. A voltage value of the rectangular wave voltage at this time increases/decreases depending on the ON/OFF frequency of the switch Q13.

In other words, in the lighting circuit 1 in the present embodiment, a part of the polarity inverting circuit 12 (switches Q13, Q15) is also used as the step-down chopper circuit.

Therefore, the discharge lamp lighting device in the present embodiment can attain similar effects to those in the first embodiment, and since it is no need to provide the step-down chopper circuit (down converter circuit 11) or the like separately from the polarity inverting circuit 12, circuit scale can be reduced and further reduction of size and costs can be achieved. In Fig. 4, the resonance capacitor C20 is inserted between the intermediate tap nc of the resonance inductor T20 and the negative electrode of the DC power source DC. However, the resonance capacitor C20 may be inserted between the intermediate tap nc of the resonance inductor T20 and the positive electrode of the DC power source DC.

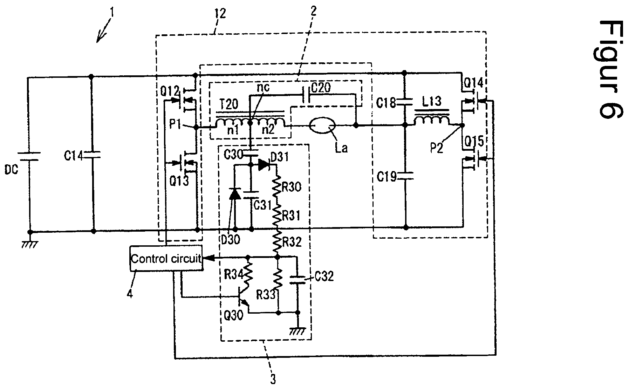

Fig. 6 shows another discharge lamp lighting device in the present embodiment. The lighting circuit 1 shown in Fig. 6 is different from the lighting circuit 1 in the first embodiment in that a the step-down inductor L13, a first step-down capacitor C18 and a second step-down capacitor C19 are provided in place of the down converter circuit 11. As in the first embodiment, the lighting circuit 1 shown in Fig. 6 includes the PFC circuit 10 and the polarity inverting circuit 12. However, in Fig. 6, for simplification of illustration, the AC power source AC and the PFC circuit 10 are shown as the DC power source DC.

As in the first embodiment, the polarity inverting circuit 12 includes the four switches Q12 to Q15. Here, step-down inductor L13 is inserted between the output end P2 of the polarity inverting circuit 12 and the electrode of the discharge lamp La (electrode electrically connected to the output end P2). The first step-down capacitor C18 is inserted between the connection point of the step-down inductor L13 and the discharge lamp La and the positive electrode of the DC power source DC, and the second step -down capacitor C19 is inserted between the connection point (connection point of the step-down inductor L13 and the discharge lamp La) and the negative electrode of the DC power source DC.

In other words, in the lighting circuit 1 in the present embodiment, the switches Q12 to Q15, the step-down inductor L13, the first and second step-down capacitors C18, C19 constitute the step-down chopper circuit.

Also in the discharge lamp lighting device shown in Fig. 6, in the lighting mode, the control circuit 4 is configured so as to alternately perform the first control and the second control.

The lighting circuit 1 shown in Fig. 6 is, as described above, provided with the step-down inductor L13 and the first and second step-down capacitors C18, C19. For this reason, a voltage value of the rectangular wave voltage at the first control increases/decreases depending on the ON/OFF frequency of the switch Q15. On the other hand, a voltage value of the rectangular wave voltage at the second control increases/decreases depending on the ON/OFF frequency of the switch Q13. In other words, also in the lighting circuit 1 shown in Fig. 6, as in Fig. 4, part of the polarity inverting circuit 12 (switches Q13, Q15) is also used as the step-down chopper circuit.

For this reason, the discharge lamp lighting device shown in Fig. 6 can attain similar effects to those in the first embodiment, and since it is no need to provide the step-down chopper circuit (down converter circuit 11) or the like separately from the polarity inverting circuit 12, circuit scale can be reduced and further reduction of size and costs can be achieved.

### (Third embodiment)

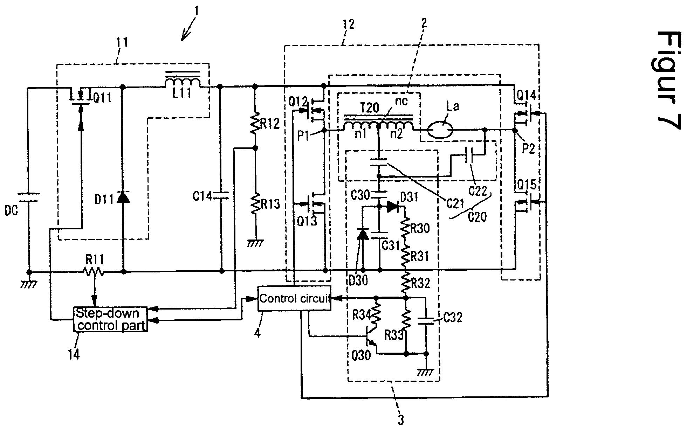

In discharge lamp lighting device in the present embodiment, as shown in Fig. 7, the resonance circuit 2 is mainly different from those in the first embodiment. Since the other configuration in the present embodiment is similar to configuration in the first embodiment, similar elements are given the same reference numerals and description thereof is omitted.

As in the first embodiment, the resonance circuit 2 in the present embodiment includes the resonance inductor T20 and the resonance capacitor C20. However, the resonance capacitor C20 in the present embodiment is a series circuit formed of a plurality of (two in the figure) capacitors C21, C22.

In the present embodiment, one end of the capacitor C30 of the voltage detecting circuit 3 is connected between the capacitor C21 and the capacitor C22, not the intermediate tap nc. Thus, in the voltage detecting circuit 3 in the present embodiment, the potential between the capacitor C21 and the capacitor C22 is detected as a potential of the resonance capacitor C20. In other words, the voltage detecting circuit 3 detects the output voltage of the resonance circuit 2 based on the potential of at least one of the plurality of capacitors C21, C22.

Here, the potential between the capacitors C21, C22 is determined depending on the voltage between the both ends of the resonance capacitor C20 and electrostatic capacity of each of the capacitors C21, C22. For example, in the case where the turn ratio of the primary winding n1 to the secondary winding n2 in the resonance inductor T20 is 1:1, when the output voltage of the resonance circuit 2 is 3000 V, the voltage between the both ends of the resonance capacitor C20 becomes 1500 V. At this time, when the ratio of the capacitor C21 to the capacitor C22 in electrostatic capacity is 1:1, the voltage between the both ends of each of the capacitors C21, C22 becomes 750 V. For this reason, a potential detected by the voltage detecting circuit 3 can be set to 1/4 of the output voltage of the resonance circuit 2.

As described above, according to the discharge lamp lighting device in the present embodiment, as compared to the case where the resonance capacitor C20 is formed of a single capacitor (the case described in the first embodiment), the potential detected by the voltage detecting circuit 3 can be further lowered. For this reason, the voltage detecting circuit 3 having a lower voltage resistance can be adopted. Thus, further reduction of size and costs can be achieved.

Although the ratio of the capacitor C21 to the capacitor C22 in electrostatic capacity is 1:1 in the present embodiment, the ratio is not limited to 1:1. The resonance capacitor 20 may includes a series circuit formed of more capacitors than the two capacitors C21, C22. Technical concept in the present embodiment can also be applied to the second embodiment.

### (Fourth embodiment)

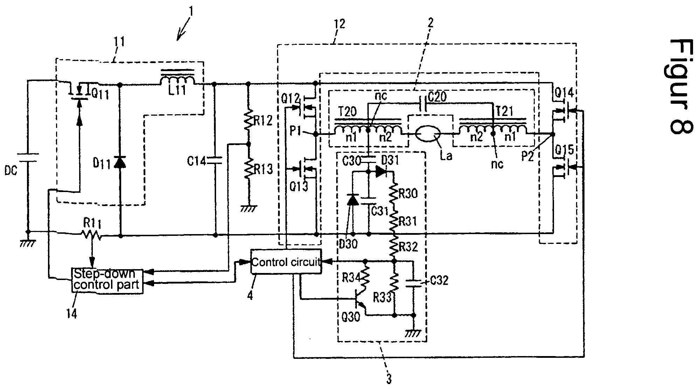

In discharge lamp lighting device in the present embodiment, as shown in Fig. 8, the resonance circuit 2 is mainly different from that in the first embodiment. Since the other configuration in the present embodiment is similar to configuration in the first embodiment, similar elements are given the same reference numerals and description thereof is omitted.

The resonance circuit 2 in the present embodiment includes two resonance inductors T20, T21 and one resonance capacitor C20. One resonance inductor T20 is inserted between the first output end P1 of the polarity inverting circuit 12 and one electrode of the discharge lamp La. The other resonance inductor T21 is inserted between the second output end P2 of the polarity inverting circuit 12 and the other electrode of the discharge lamp La. Both of these resonance inductors T20, T21 are auto transformers and, in each resonance inductors, the primary winding (shunt winding) n1 is serially connected to the secondary winding (series winding) n2. The intermediate tap nc is drawn from between the primary winding n1 and the secondary winding n2. The resonance capacitor C20 is inserted between the intermediate tap nc of the one resonance inductor T20 and the intermediate tap nc of the other resonance inductor T21.

In the resonance circuit 2 in the present embodiment, the primary windings n1 of the resonance inductors T20, T21 and the resonance capacitor C20 constitute the LC series resonance circuit. For this reason, the output voltage of the resonance circuit 2 in the present embodiment becomes equal to the voltage obtained by adding the voltage between the both ends of the resonance inductor T20 to the voltage between the both ends of the resonance inductor T21. The voltage between both ends of each of the resonance inductors T20, T21 is equal to the voltage obtained by raising the voltage between both ends of the primary winding n1 according to the turn ratio of the primary winding n1 to the secondary winding n2 (that is, the turn ratio of the shunt winding to the series winding). For this reason, when the number of turns of the resonance inductor T20 is equal to that of the resonance inductor T21 and the turn ratio of the primary winding n1 to the secondary winding n2 is 1:1, an absolute value of the potential of the intermediate tap nc in the resonance inductor T20 becomes 1/4 of the output voltage of the resonance circuit 2.

As described above, according to the discharge lamp lighting device in the present embodiment, the potential detected by the voltage detecting circuit 3 can be further lowered. For this reason, the voltage detecting circuit 3 having a lower voltage resistance can be adopted. Thus, size and costs can be further reduced. Although the turn ratio of each of the resonance inductors T20, T21 is 1:1 in the present embodiment, the turn ratio is not limited to 1:1. Technical concept in the present embodiment can be applied to the second and third embodiments.

### [Brief Description of the Drawings]

[Fig.1] Fig. 1 is a circuit configuration diagram of a discharge lamp lighting device in a first embodiment.
[Fig.2] Figs. 2 are waveform charts showing operations of the discharge lamp lighting device in the first embodiment at start.
[Fig.3] Fig. 3 is a circuit configuration diagram showing another example of the discharge lamp lighting device in the first embodiment.
[Fig.4] Fig. 4 is a circuit configuration diagram of a discharge lamp lighting device in a second embodiment.
[Fig.5] Figs. 5 are waveform charts showing operations of the discharge lamp lighting device in the second embodiment.
[Fig.6 Fig. 6 is a circuit configuration diagram showing another example of the discharge lamp lighting device in the second embodiment.
[Fig.7] Fig. 7 is a circuit configuration diagram of a discharge lamp lighting device in a third embodiment.
[Fig.8] Fig. 8 is a circuit configuration diagram of a discharge lamp lighting device in a fourth embodiment.
[Fig.9] Fig. 9 is a circuit configuration diagram of a conventional discharge lamp lighting device.

### [Description of Reference Numerals]

1 : Lighting circuit
2 : Resonance circuit
3 : Voltage detecting circuit
4 : Control circuit
12 : Polarity inverting circuit
La : Discharge lamp
nc : Intermediate tap
P1 : First output end
P2 : Second output end
T20 : Resonance inductor
C17 : Step-down capacitor
C18 : First step-down capacitor
C19 : Second step-down capacitor
C20 : Resonance capacitor
L12 : Step-down inductor

### Fig. 1

1 : Step-up circuit
2 : Step-down control part
3 : Control circuit
4 : Resonance circuit
5 : Voltage detecting circuit
6 : Control circuit
7 : Polarity inverting circuit
8 : Discharge lamp
9 : Intermediate tap
10 : First output end
11 : Resonance inductor
12 : Resonance capacitor

### Fig. 2

1 : Maximum frequency
2 : Minimum frequency
3 : Threshold value

### Fig. 3

1 : Step-down control part
2 : Control circuit

### Fig. 4

1 : Control circuit

### Fig. 5

1 : Unlighted
2 : Lighted
3 : Start

### Fig. 6

1 : Control circuit

### Fig. 7

1 : Step-down control part
2 : Control circuit

### Fig. 8

1 : Step-down control part
2 : Control circuit

### Fig. 9

1 : Step-up control circuit
2 : Step-down control part
3 : Control circuit

## Claims

1. A discharge lamp lighting device connectible with a discharge lamp (La) and a DC power source, the discharge lamp lighting device comprising: a lighting circuit (1) adapted to supply a rectangular wave voltage with its polarity inverted at a determined frequency; a resonance circuit (2) adapted to supply an output voltage corresponding to a frequency of the rectangular wave voltage of the lighting circuit (1) to the discharge lamp (La); and a control circuit (4) adapted to set the frequency of the rectangular wave voltage;
the lighting circuit (1) includes a polarity inverting circuit (12) comprising a pair of output ends (P1, P2), wherein the polarity inverting circuit (12) is adapted to convert a DC voltage obtained from a DC power source into the rectangular wave voltage and to supply the converted voltage to the pair of output ends (P1, P2);
the resonance circuit (2) includes a resonance inductor (T20) formed of an auto transformer and a resonance capacitor (C20), the resonance inductor (T20) being inserted between one output (P1) end of the polarity inverting circuit (12) and the discharge lamp (La) and the resonance capacitor (C20) being inserted between an intermediate tap of the resonance inductor (T20) and the other output end (P2) of the polarity inverting circuit (12), **characterized in that**
a voltage detecting circuit (3) is provided, the voltage detecting circuit (3) is adapted to detect an output voltage of the resonance circuit (2) based on a potential of the resonance capacitor (C20), wherein the control circuit (4) is adapted to set the frequency of the rectangular wave voltage based on a detection result of the voltage detecting circuit (3) at start of the discharge lamp (La) so that the output voltage of the resonance circuit (2) exceeds a starting voltage of the discharge lamp (La).

2. A discharge lamp lighting device connectible with a discharge lamp (La) and a DC power source, the discharge lamp lighting device comprising: a lighting circuit (1) adapted to supply a rectangular wave voltage with its polarity inverted at a determined frequency; a resonance circuit (2) adapted to supply an output voltage corresponding to a frequency of the rectangular wave voltage of the lighting circuit (1) to the discharge lamp (La); and a control circuit (4) adapted to set the frequency of the rectangular wave voltage;
the lighting circuit (1) includes a polarity inverting circuit (12), the polarity inverting circuit (12) comprising a pair of output ends (P1, P2), wherein the polarity inverting circuit (12) is adapted to convert a DC voltage obtained from the DC power source into the rectangular wave voltage and to supply the converted voltage to the pair of output ends (P1, P2);
the resonance circuit (2) includes a resonance inductor (T20) formed of an auto transformer and a resonance capacitor (C20), the resonance inductor (T20) is inserted between the first output end (P1) of the polarity inverting circuit (12) and the discharge lamp (La); **characterized in that**
the resonance capacitor (C20) is inserted between an intermediate tap of the resonance inductor (T20) and a positive electrode or a negative electrode of the DC power source;
the lighting circuit (1) further includes a step-down inductor (L12) and a step-down capacitor (C17), the step-down inductor (L12) is inserted between the second output end (P2) of the polarity inverting circuit (12) and the discharge lamp (La), and the step-down capacitor (C17) is inserted between a connection point of the step-down inductor (L12) and the discharge lamp (La) and the first output end (P1) of the polarity inverting circuit (12);
a voltage detecting circuit (3) is provided, the voltage detecting circuit (3) is adapted to detect an output voltage of the resonance circuit (2) based on a potential of the resonance capacitor (C20), wherein the control circuit (4) is adapted to set the frequency of the rectangular wave voltage based on a detection result of the voltage detecting circuit (3) at start of the discharge lamp (La) so that the output voltage of the resonance circuit (2) exceeds a starting voltage of the discharge lamp (La).

3. A discharge lamp lighting device connectible with a discharge lamp (La) and a DC power source, the discharge lamp lighting device comprising: a lighting circuit (1) adapted to supply a rectangular wave voltage with its polarity inverted at a determined frequency; a resonance circuit (2) adapted to supply an output voltage corresponding to a frequency of the rectangular wave voltage of the lighting circuit to the discharge lamp (La); and a control circuit (4) adapted to set the frequency of the rectangular wave voltage;
the lighting circuit (1) includes a polarity inverting circuit (12) comprising a pair of output ends (P1, P2), wherein the polarity inverting circuit (12) is adapted to convert a DC voltage obtained from the DC power source into the rectangular wave voltage and to supply the converted voltage to the pair of output ends (P1, P2), a step-down inductor (L12) is inserted between one output end (P2) of the polarity inverting circuit (12) and the discharge lamp (La) ;
the resonance circuit (2) includes a resonance inductor (T20) formed of an auto transformer and a resonance capacitor (C20), the resonance inductor (T20) is inserted between the other output end (P1) of the polarity inverting circuit (12) and the discharge lamp (La); **characterized in that**
the resonance capacitor (C20) is inserted between an intermediate tap of the resonance inductor (T20) and a connection point;
the lighting circuit (1) further includes a step-down inductor (L13), a first step-down capacitor (C18) and a second step-down capacitor (C19), the first step-down capacitor (C18) is inserted between the connection point of the step-down inductor (L13) and the discharge lamp (La) and a positive electrode of the DC power source, the second step-down capacitor (C19) is inserted between the connection point and a negative electrode of the DC power source;
a voltage detecting circuit (3) is provided, the voltage detecting circuit (3) is adapted to detect an output voltage of the resonance circuit (2) based on a potential of the resonance capacitor (C20), wherein the control circuit (4) is adapted to set the frequency of the rectangular wave voltage based on a detection result of the voltage detecting circuit (3) at start of the discharge lamp (La) so that the output voltage of the resonance circuit (2) exceeds a starting voltage of the discharge lamp (La).

4. The discharge lamp lighting device according to any one of claims 1 to 3, wherein at start of the discharge lamp (La), the control circuit (4) is adapted to change the frequency of the rectangular wave voltage in a predetermined frequency range so that the frequency of the rectangular wave voltage gets close to a target frequency, and
the target frequency is 1 / (an odd number) of a resonance frequency of the resonance circuit (2).

5. The discharge lamp lighting device according to any one of claims 1 to 4, wherein;
the resonance capacitor (C20) includes a series circuit formed of a plurality of capacitors (C21, C22); and
the voltage detecting circuit (4) is adapted to detect the output voltage based on a potential of one of the plurality of capacitors (C21, C22).

6. An illumination fixture comprising:
the discharge lamp lighting device according to any one of claims 1 to 5; and
a fixture main body to which a discharge lamp (La) lighted by the discharge lamp lighting device is attached.

7. A projector comprising:
the discharge lamp lighting device according to any one of claims 1 to 5; and
a projector main body to which a discharge lamp (La) lighted by the discharge lamp lighting device is attached.

## Patentansprüche

1. Entladungslampenbeleuchtungsvorrichtung, die mit einer Entladungslampe (La) und einer Gleichspannungsleistungsquelle verbindbar ist, wobei die Entladungslampenbeleuchtungsvorrichtung aufweist: einen Zündschaltkreis (1), der dazu eingerichtet ist, eine Rechteckwellenspannung bereitzustellen, deren Polarität mit einer vorherbestimmten Frequenz invertiert wird; einen Resonanzschaltkreis (2), der dazu eingerichtet ist, eine Ausgangsspannung für die Entladungslampe (La) bereitzustellen, die einer Frequenz der Rechteckwellenspannung des Zündschaltkreises (1) entspricht; und einen Steuerschaltkreis (4), der dazu eingerichtet ist, die Frequenz der Rechteckwellenspannung einzustellen;
wobei der Zündschaltkreis (1) einen Polaritätsinverterschaltkreis (12) aufweisend ein Paar von Ausgangsenden (P1, P2) aufweist, wobei der Polaritätsinverterschaltkreis (12) dazu eingerichtet ist, eine Gleichspannung, die von der Gleichspannungsleistungsquelle erhalten wird, in die Rechteckwellenspannung umzuwandeln und die umgewandelte Spannung dem Paar von Ausgangsenden (P1, P2) bereitzustellen;
wobei der Resonanzschaltkreis (2) eine Resonanzinduktivität (T20), die von einem Spartransformator gebildet ist, und einen Resonanzkondensator (C20) aufweist, wobei die Resonanzinduktivität (T20) zwischen ein Ausgangsende (P1) des Polaritätsinverterschaltkreises (12) und die Entladungslampe (La) eingesetzt ist und der Resonanzkondensator (C20) zwischen einen Zwischenabgriff der Resonanzinduktivität (T20) und dem anderen Ausgangsende (P2) des Polaritätsinverterschaltkreises (12) eingesetzt ist, **dadurch gekennzeichnet, dass**
ein Spannungsdetektorschaltkreis (3) bereitgestellt ist, wobei der Spannungsdetektorschaltkreis (3) dazu eingerichtet ist, eine Ausgangsspannung des Resonanzschaltkreises (2) basierend auf einem Potential des Resonanzkondensators (C20) zu detektieren, wobei der Steuerschaltkreis (4) dazu eingerichtet ist, die Frequenz der Rechteckwellenspannung basierend auf einem Detektionsergebnis des Spannungsdetektorschaltkreises (3) beim Start der Entladungslampe (La) einzustellen, so dass die Ausgangsspannung des Resonanzschaltkreises (2) eine Startspannung der Entladungslampe (La) überschreitet.

2. Entladungslampenbeleuchtungsvorrichtung, die mit einer Entladungslampe (La) und einer Gleichspannungsleistungsquelle verbindbar ist, wobei die Entladungslampenbeleuchtungsvorrichtung aufweist: einen Zündschaltkreis (1), der dazu eingerichtet ist, eine Rechteckwellenspannung bereitzustellen, deren Polarität mit einer vorherbestimmten Frequenz invertiert wird; einen Resonanzschaltkreis (2), der dazu eingerichtet ist, eine Ausgangsspannung für die Entladungslampe (La) bereitzustellen, die einer Frequenz der Rechteckwellenspannung des Zündschaltkreises (1) entspricht; und einen Steuerschaltkreis (4), der dazu eingerichtet ist die Frequenz der Rechteckwellenspannung einzustellen;
wobei der Zündschaltkreis (1) einen Polaritätsinverterschaltkreis (12) aufweist, wobei der Polaritätsinverterschaltkreis (12) ein Paar von Ausgangsenden (P1, P2) aufweist, wobei der Polaritätsinverterschaltkreis (12) dazu eingerichtet ist, eine Gleichspannung, die er von der Gleichspannungsleistungsquelle erhält, in die Rechteckwellenspannung umzuwandeln und die umgewandelte Spannung dem Paar von Ausgangsenden (P1, P2) bereitzustellen;
wobei der Resonanzschaltkreis (2) eine Resonanzinduktivität (T20), die von einem Spartransformator gebildet ist, und einen Resonanzkondensator (C20) aufweist, wobei die Resonanzinduktivität (T20) zwischen das erste Ausgangsende (P1) des Polaritätsinverterschaltkreises (12) und die Entladungslampe (La) eingesetzt ist; **dadurch gekennzeichnet, dass**
der Resonanzkondensator (C20) zwischen einen Zwischenabgriff der Resonanzinduktivität (T20) und eine positive Elektrode oder eine negative Elektrode der Gleichspannungsleistungsquelle eingesetzt ist;
wobei der Zündschaltkreis (1) außerdem eine Tiefsetzinduktivität (L12) und einen Tiefsetzkondensator (C17) aufweist, wobei die Tiefsetzinduktivität (L12) zwischen das zweite Ausgangsende (P2) des Polaritätsinverterschaltkreises (12) und die Entladungslampe (La) eingesetzt ist, und der Tiefsetzkondensator (C17) zwischen einen Verbindungspunkt der Tiefsetzinduktivität (L12) und der Entladungslampe (La) und dem ersten Ausgangsende (P1) des Polaritätsinverterschaltkreises (12) eingesetzt ist;
wobei ein Spannungsdetektorschaltkreis (3) bereitgestellt ist, wobei der Spannungsdetektorschaltkreis (3) dazu eingerichtet ist, eine Ausgangsspannung des Resonanzschaltkreises (2) basierend auf einem Potential des Resonanzkondensators (C20) zu detektieren, wobei der Steuerschaltkreis (4) dazu eingerichtet ist, die Frequenz der Rechteckwellenspannung basierend auf einem Detektionsergebnis des Spannungsdetektorschaltkreises (3) beim Start der Entladungslampe (La) einzustellen, so dass die Ausgangsspannung des Resonanzschaltkreises (2) eine Startspannung der Entladungslampe (La) überschreitet.

3. Entladungslampenbeleuchtungsvorrichtung, die mit einer Entladungslampe (La) und einer Gleichspannungsleistungsquelle verbindbar ist, wobei die Entladungslampenbeleuchtungsvorrichtung aufweist: einen Zündschaltkreis (1), der dazu eingerichtet ist, eine Rechteckwellenspannung bereitzustellen, deren Polarität mit einer vorherbestimmten Frequenz invertiert wird; einen Resonanzschaltkreis (2), der dazu eingerichtet ist, eine Ausgangsspannung für die Entladungslampe (La) bereitzustellen, die einer Frequenz der Rechteckwellenspannung des Zündschaltkreises entspricht; und einen Steuerschaltkreis (4), der dazu eingerichtet ist, die Frequenz der Rechteckwellenspannung einzustellen;
wobei der Zündschaltkreis (1) einen Polaritätsinverterschaltkreises (12) aufweisend ein Paar von Ausgangsenden (P1, P2) aufweist, wobei der Polaritätsinverterschaltkreises (12) dazu eingerichtet ist, eine Gleichspannung, die er von der Gleichspannungsleistungsquelle erhält, in die Rechteckwellenspannung umzuwandeln und die umgewandelte Spannung dem Paar von Ausgangsenden (P1, P2) bereitzustellen, wobei eine Tiefsetzinduktivität (L12) zwischen einem Ausgangsende (P2) des Polaritätsinverterschaltkreises (12) und der Entladungslampe (La) eingesetzt ist;
wobei der Resonanzschaltkreis (2) eine Resonanzinduktivität (T20), die von einem Spartransformator gebildet ist, und einen Resonanzkondensator (C20) aufweist, wobei die Resonanzinduktivität (T20) zwischen das andere Ausgangsende (P1) des Polaritätsinverterschaltkreises (12) und die Entladungslampe (La) eingesetzt ist; **dadurch gekennzeichnet, dass**
der Resonanzkondensator (C20) zwischen einen Zwischenabgriff der Resonanzinduktivität (T20) und einen Verbindungspunkt eingesetzt ist;
wobei der Zündschaltkreis (1) außerdem eine Tiefsetzinduktivität (L13), einen ersten Tiefsetzkondensator (C18) und eine zweiten Tiefsetzkondensator (C19) aufweist, wobei der erste Tiefsetzkondensator (C18) zwischen den Verbindungspunkt der Tiefsetzinduktivität (L13) und der Entladungslampe (La) und einer positiven Elektrode der Gleichspannungsleistungsquelle eingesetzt ist, wobei der zweite Tiefsetzkondensator (C19) zwischen den Verbindungspunkt und einer negativen Elektrode der Gleichspannungsleistungsquelle eingesetzt ist;
wobei ein Spannungsdetektorschaltkreis (3) bereitgestellt ist, wobei der Spannungsdetektorschaltkreis (3) dazu eingerichtet ist, eine Ausgangsspannung des Resonanzschaltkreises (2) basierend auf einem Potential des Resonanzkondensators (C20) zu detektieren, wobei der Steuerschaltkreis (4) dazu eingerichtet ist, die Frequenz der Rechteckwellenspannung basierend auf einem Detektionsergebnis des Spannungsdetektorschaltkreises (3) beim Start der Entladungslampe (La) einzustellen, so dass die Ausgangsspannung des Resonanzschaltkreises (2) eine Startspannung der Entladungslampe (La) überschreitet.

4. Entladungslampenbeleuchtungsvorrichtung nach irgendeinem der Ansprüche 1 bis 3, wobei der Steuerschaltkreis (4) beim Start der Entladungslampe (La) dazu eingerichtet ist, die Frequenz der Rechteckwellenspannung in einem vorherbestimmten Frequenzbereich zu ändern, so dass die Frequenz der Rechteckwellenspannung einer Sollfrequenz nahekommt, und
wobei die Sollfrequenz 1/(eine ungerade Zahl) einer Resonanzfrequenz des Resonanzschaltkreises (2) ist.

5. Entladungslampenbeleuchtungsvorrichtung nach irgendeinem der Ansprüche 1 bis 4, wobei;
der Resonanzkondensator (C20) eine Reihenschaltung aus einer Mehrzahl von Kondensatoren (C21, C22) aufweist; und
der Spannungsdetektorschaltkreis (4) dazu eingerichtet ist, die Ausgangsspannung basierend auf einem Potential von einem von der Mehrzahl von Kondensatoren (C21, C22) zu detektieren.

6. Beleuchtungshalterung aufweisend;
die Entladungslampenbeleuchtungsvorrichtung nach irgendeinem der Ansprüche 1 bis 5; und
einen Halterungshauptkörper, an dem eine Entladungslampe (La) angebracht ist, die durch die Entladungslampenbeleuchtungsvorrichtung zum Leuchten gebracht wird.

7. Projektor, aufweisend:
die Entladungslampenbeleuchtungsvorrichtung nach irgendeinem der Ansprüche 1 bis 5; und
einen Projektorhauptkörper, an dem die Entladungslampe (La) angebracht ist, die durch die Entladungslampenbeleuchtungsvorrichtung zum Leuchten gebracht wird.

## Revendications

1. Dispositif d'allumage de lampe à décharge connectable à une lampe à décharge (La) et à une source d'alimentation en courant continu (CC), le dispositif d'allumage de lampe à décharge comprenant : un circuit d'allumage (1) conçu pour fournir une tension à onde rectangulaire dont la polarité s'inverse à une fréquence déterminée ; un circuit résonnant (2) conçu pour fournir à la lampe à décharge (La) une tension de sortie correspondant à une fréquence de la tension à onde rectangulaire du circuit d'allumage (1) ; et un circuit de commande (4) conçu pour régler la fréquence de la tension à onde rectangulaire ;
le circuit d'allumage (1) comprenant un circuit d'inversion de polarité (12) comprenant une paire de bornes de sortie (P1, P2), le circuit d'inversion de polarité (12) étant conçu pour convertir une tension continue obtenue d'une source d'alimentation CC en la tension à onde rectangulaire et pour fournir la tension convertie à la paire de bornes de sortie (P1, P2) ;
le circuit résonnant (2) comprenant une inductance résonnante (T20) formée d'un autotransformateur et un condensateur résonnant (C20), l'inductance résonnante (T20) étant insérée entre une borne de sortie (P1) du circuit d'inversion de polarité (12) et la lampe à décharge (La) et le condensateur résonnant (C20) étant inséré entre une prise intermédiaire de l'inductance résonnante (T20) et l'autre borne de sortie (P2) du circuit d'inversion de polarité (12), **caractérisé en ce que** :
un circuit de détection de tension (3) est prévu, le circuit de détection de tension (3) étant conçu pour détecter une tension de sortie du circuit résonnant (2) sur la base d'un potentiel du condensateur résonnant (C20), le circuit de commande (4) étant conçu pour régler la fréquence de la tension à onde rectangulaire sur la base d'un résultat de détection du circuit de détection de tension (3) à l'amorçage de la lampe à décharge (La) de manière que la tension de sortie du circuit résonnant (2) dépasse une tension d'amorçage de la lampe à décharge (La).

2. Dispositif d'allumage de lampe à décharge connectable à une lampe à décharge (La) et à une source d'alimentation CC, le dispositif d'allumage de lampe à décharge comprenant : un circuit d'allumage (1) conçu pour fournir une tension à onde rectangulaire dont la polarité s'inverse à une fréquence déterminée ; un circuit résonnant (2) conçu pour fournir à la lampe à décharge (La) une tension de sortie correspondant à une fréquence de la tension à onde rectangulaire du circuit d'allumage (1) ; et un circuit de commande (4) conçu pour régler la fréquence de la tension à onde rectangulaire ;
le circuit d'allumage (1) comprenant un circuit d'inversion de polarité (12), le circuit d'inversion de polarité (12) comprenant une paire de bornes de sortie (P1, P2), le circuit d'inversion de polarité (12) étant conçu pour convertir une tension continue obtenue de la source d'alimentation CC en la tension à onde rectangulaire et pour fournir la tension convertie à la paire de bornes de sortie (P1, P2) ;
le circuit résonnant (2) comprenant une inductance résonnante (T20) formée d'un autotransformateur et un condensateur résonnant (C20), l'inductance résonnante (T20) étant insérée entre la première borne de sortie (P1) du circuit d'inversion de polarité (12) et la lampe à décharge (La) ; **caractérisé en ce que** :
le condensateur résonnant (C20) est inséré entre une prise intermédiaire de l'inductance résonnante (T20) et une électrode positive ou une électrode négative de la source d'alimentation CC ;
le circuit d'allumage (1) comprend en outre une inductance abaisseuse (L12) et un condensateur abaisseur (C17), l'inductance abaisseuse (L12) étant insérée entre la seconde borne de sortie (P2) du circuit d'inversion de polarité (12) et la lampe à décharge (La), et le condensateur abaisseur (C17) étant inséré entre un point de connexion de l'inductance abaisseuse (T12) et de la lampe à décharge (La) et la première borne de sortie (P1) du circuit d'inversion de polarité (12) ;
un circuit de détection de tension (3) est prévu, le circuit de détection de tension (3) étant conçu pour détecter une tension de sortie du circuit résonnant (2) sur la base d'un potentiel du condensateur résonnant (C20), le circuit de commande (4) étant conçu pour régler la fréquence de la tension à onde rectangulaire sur la base d'un résultat de détection du circuit de détection de tension (3) à l'amorçage de la lampe à décharge (La) de manière que la tension de sortie du circuit résonnant (2) dépasse une tension d'amorçage de la lampe à décharge (La).

3. Dispositif d'allumage de lampe à décharge connectable à une lampe à décharge (La) et à une source d'alimentation CC, le dispositif d'allumage de lampe à décharge comprenant : un circuit d'allumage (1) conçu pour fournir une tension à onde rectangulaire dont la polarité s'inverse à une fréquence déterminée ; un circuit résonnant (2) conçu pour fournir à la lampe à décharge (La) une tension de sortie correspondant à une fréquence de la tension à onde rectangulaire du circuit d'allumage (1) ; et un circuit de commande (4) conçu pour régler la fréquence de la tension à onde rectangulaire ;
le circuit d'allumage (1) comprenant un circuit d'inversion de polarité (12) comprenant une paire de bornes de sortie (P1, P2), le circuit d'inversion de polarité (12) étant conçu pour convertir une tension continue obtenue de la source d'alimentation CC en la tension à onde rectangulaire et pour fournir la tension convertie à la paire de bornes de sortie (P1, P2), une inductance abaisseuse (L12) étant insérée entre une borne de sortie (P2) du circuit d'inversion de polarité (12) et la lampe à décharge (La) ;
le circuit résonnant (2) comprenant une inductance résonnante (T20) formée d'un autotransformateur et un condensateur résonnant (C20), l'inductance résonnante (T20) étant insérée entre l'autre borne de sortie (P1) du circuit d'inversion de polarité (12) et la lampe à décharge (La) ; **caractérisé en ce que** :
le condensateur résonnant (C20) est inséré entre une prise intermédiaire de l'inductance résonnante (T20) et un point de connexion ;
le circuit d'allumage (1) comprend en outre une inductance abaisseuse (L13), un premier condensateur abaisseur (C18) et un second condensateur abaisseur (C19), le premier condensateur abaisseur (C18) étant inséré entre le point de connexion de l'inductance abaisseuse (T13) et de la lampe à décharge (La) et une électrode positive de la source d'alimentation CC, le second condensateur abaisseur (C19) étant inséré entre le point de connexion et une électrode négative de la source d'alimentation CC ;
un circuit de détection de tension (3) est prévu, le circuit de détection de tension (3) étant conçu pour détecter une tension de sortie du circuit résonnant (2) sur la base d'un potentiel du condensateur résonnant (C20), le circuit de commande (4) étant conçu pour régler la fréquence de la tension à onde rectangulaire sur la base d'un résultat de détection du circuit de détection de tension (3) à l'amorçage de la lampe à décharge (La) de manière que la tension de sortie du circuit résonnant (2) dépasse une tension d'amorçage de la lampe à décharge (La).

4. Dispositif d'allumage de lampe à décharge selon l'une quelconque des revendications 1 à 3, dans lequel, à l'amorçage de la lampe à décharge (La), le circuit de commande (4) est conçu pour faire varier la fréquence de la tension à onde rectangulaire dans une plage de fréquence prédéterminée de manière que la fréquence de la tension à onde rectangulaire soit proche d'une fréquence cible, et
la fréquence cible vaut 1/(un nombre impair) de la fréquence de résonance du circuit résonnant (2).

5. Dispositif d'allumage de lampe à décharge selon l'une quelconque des revendications 1 à 4, dans lequel :
le condensateur résonnant (C20) comprend un circuit série formé d'une pluralité de condensateurs (C21, C22) ; et
le circuit de détection de tension (4) est conçu pour détecter la tension de sortie sur la base d'un potentiel d'un condensateur de la pluralité de condensateurs (C21, C22).

6. Appareil d'éclairage comprenant :
le dispositif d'allumage de lampe à décharge selon l'une quelconque des revendications 1 à 5 ; et
un corps principal d'appareil auquel est fixée une lampe à décharge (La) allumée par le dispositif d'allumage de lampe à décharge.

7. Projecteur comprenant :
le dispositif d'allumage de lampe à décharge selon l'une quelconque des revendications 1 à 5 ; et
un corps principal de projecteur auquel est fixée une lampe à décharge (La) allumée par le dispositif d'allumage de lampe à décharge.
